# EUROPEAN PATENT APPLICATION

(11) **EP 2 518 985 A1**
(43) Date of publication of application: **31.10.2012**
(21) Application number: 11163961.3
(22) Date of filing: 27.04.2011
(51) Int. Cl.: H04M 3/56

(54) **Communication device for generating a conference provisioning data set**

(71) Applicant: Research In Motion Limited, Waterloo, ON N2L 3W8 (CA)
(72) Inventor: Singh, Harmeet, Redwood City, CA 94065 (US)
(74) Representative: Patel, Binesh

(57) **Abstract**

A communication method and device for generating a conference provisioning data set. A conference interface receives a user selected conference provider among a plurality of available conference providers presented to the user, and conference event detail associated with a conference event. The communication device further includes a conference provisioning agent for communicating with an enhanced conference server to generate the conference provisioning data set associated with the selected conference provider.

## Description

### TECHNICAL FIELD

The present disclosure relates to a communication device, more particularly, the present disclosure relates to generating a conference event across a plurality of conference providers.

### BACKGROUND

Meeting is the most common forum for people to come together to share ideas and collaborate. Prior to the advances in communication technologies, meeting attendees physically convened at a location to share and collaborate face to face. However, with corporations becoming more globalized over the years, the cost associated with such meetings became unattractive. Thus, with the advances in communication technologies, virtual meetings became a popular alternative to the physical meetings. With the digital revolution, virtual meetings have been taken to a whole new level with video and web conferencing, which offers far more interactivity than the traditional audio conferencing, becoming a cost effective way to mimic a physical meeting. However, while a large corporation may have the financial flexibility to integrate a uniform conference technology in its enterprise network to allow for a seamless experience for all its users, small or medium sized corporations may rely on an external conference provider for its conferencing needs. Depending on the need or preference of the user in these corporations, different users may use different external providers, resulting in a disjointed standard for conferencing across different users. Moreover, a large corporation may not have invested the capital in incorporating a single conferencing technology or may have grown through acquisitions that resulted in multiple conference providers being used across its user base. Thus, in its current application, a user may be required to navigate through various conference providers to schedule a conference. This provides a disconnected, challenging and inconsistent experience for the user.

In light of above and other existing problems, there is a need for a communication device for generating a conference event for a plurality of conference providers.

### SUMMARY

According to an embodiment of the present disclosure, a communication device for generating a conference provisioning data set is disclosed. The communication device includes a conference interface for receiving a user-selected conference provider from among a plurality of available conference providers presented on a display and for receiving a conference event detail associated with a conference event, and a conference provisioning agent for communicating with an enhanced conference server to generate the conference provisioning data set associated with the selected conference provider.

According to another embodiment of the present disclosure, a method for generating a conference provisioning data set is disclosed. The method includes receiving a user selection for a selected conference provider among a plurality of available conference providers presented to the user, receiving conference event detail associated with a conference event, and sending the user selection and the conference event detail to an enhanced conference server to generate the conference provisioning data set associated with the selected conference provider.

According to a further embodiment a computer-readable storage medium comprising instructions in code which when loaded into a memory and executed by a processor of a mobile device causes the mobile device to perform the method for generating the conference provisioning data set as above is disclosed.

In some embodiment, the conference provisioning agent communicates with the enhanced conference server to receive conference access detail.

In some embodiment, the conference access detail includes conference bridge information.

In some embodiment, information regarding the plurality of available conference providers is received from the enhanced conference server.

In some embodiment, information regarding the plurality of available conference providers is stored in a memory.

In some embodiment, the information regarding the plurality of available conference providers stored in the memory is periodically updated from the enhanced conference server.

In some embodiment, the availability of the plurality of conference providers is determined by an access setting of the communication device.

In some embodiment, the availability of the plurality of conference providers is determined by a licence availability.

In some embodiment, the availability of the plurality of conference providers is determined by the conference event detail.

In some embodiment, the conference event is an audio conference or a video conference.

In some embodiment, the method for generating a conference provisioning data set further includes receiving conference access detail associated with the conference event.

In some embodiment, the conference event detail is specific to the selected conference provider.

### BRIEF DESCRIPTION OF THE DRAWINGS

These and other features of the disclosure will become more apparent from the following description in which reference is made to the appended drawings wherein:
FIG. 1 shows a block diagram of a communication system in which an embodiment of the present technology may be implemented;
FIG. 2 shows a block diagram of a communication device according to an embodiment of the present technology;
FIG. 3 illustrates a process for generating a conference event using the communication device as shown in FIG. 2;
FIG. 4 illustrates a process for generating the conference event, as in FIG. 3, but from the perspective of an enhanced conference server according to an embodiment of the present technology;
FIG. 5 illustrates a messaging diagram between the different components within the communication system as shown in FIG. 1;
FIG. 6 depicts an exemplary conference interface according to an embodiment of the present technology, showing the conference event detail common to the plurality of conference providers;
FIG. 7 depicts an exemplary conference interface according to an embodiment of the present technology, showing the plurality of available conference providers;
FIG. 8 depicts an exemplary conference interface according to an embodiment of the present technology, showing the conference event detail specific to the selected conference provider among the plurality of available conference providers;
FIG. 9 depicts an exemplary conference interface according to an embodiment of the present technology, showing the conference event being generated;
FIG. 10 depicts an exemplary conference interface according to an embodiment of the present technology, showing the conference access details received from the enhanced conference server; and
FIG. 11 depicts an exemplary conference interface according to an embodiment of the present technology, showing an exemplary menu interface within the conference interface.

### DETAILED DESCRIPTION

The present disclosure generally concerns a communication device that communicates with an enhanced conference server for creating, updating and deleting a conference event across a plurality of conference servers. The plurality of conference servers may be internal or external to the enterprise network. As it will be described below, by using a single conference interface, a user is able to generate the necessary provisioning data that is compatible across a plurality of the available conference servers.

In this specification and the appended claims, the singular forms "a," "an," and "the" include plural references unless the context clearly dictates otherwise. Unless defined otherwise, all technical and scientific terms used herein have the same meaning as commonly understood to one of ordinary skill in the art to which this disclosure belongs.

It will be further understood that the terms "comprises" or "comprising", or both when used in this specification, specify the presence of stated features, integers, steps, operations, elements, and/or components, but do not preclude the presence or addition of one or more other features, integers, steps, operations, elements, components, and/or groups thereof.

The term "conference" is intended to describe a meeting where more than one person communicate and/or interact. The conference may include physical meeting, or meetings on line, for example but not limited to, audio meeting or video meeting.

The term "conference event" is intended to describe the meeting with a finite time.

The details and particulars of these aspects of the technology will now be described below, by way of example, with reference to the attached drawings.

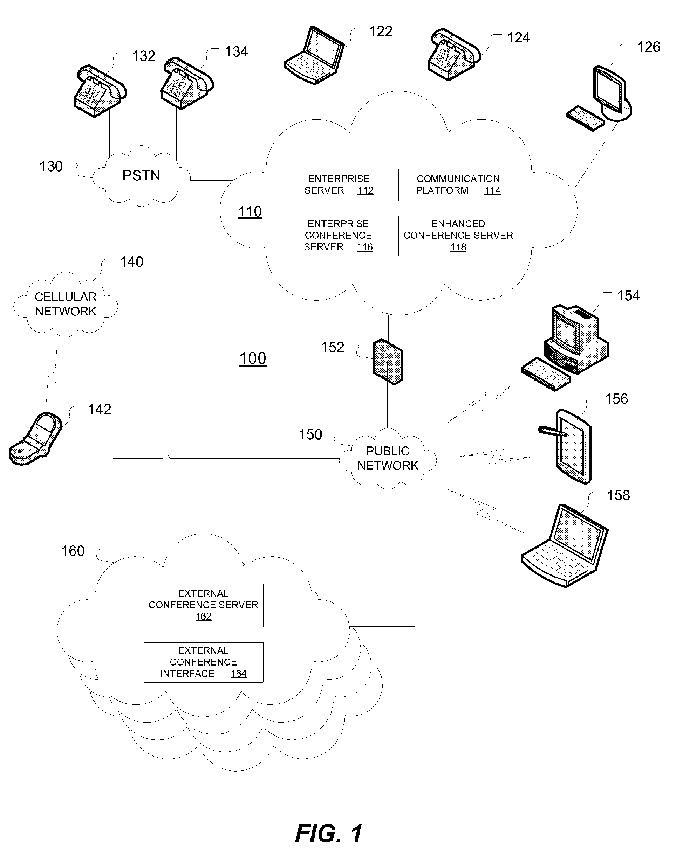

Referring to FIG. 1, there is shown a block diagram of a communication system 100 embodying an implementation of the present technology. It should be expressly understood that this figure is intentionally simplified to show only certain main components. The communication system 100 may include other components beyond what is illustrated in FIG. 1.

The communication system 100 includes an enterprise network 110 including an enterprise server 112. The enterprise server 112 may provide a variety of functionalities for the corporation, including, but not limited to, email service, file storage and management, and application-related services. The corporation may have one or many users connected to the enterprise network 110, such as communication devices 122, 124 and 126. For example, communication devices 122 and 126 may access the public network 150 through the enterprise network 110 or access files in the enterprise server 112. In a further example, the communication device 124 (or 122 and 126 acting as softphones) may initiate or receive phone call using the communication platform 114.

The communication platform 114 allows the communication devices in the corporate network (e.g. 122, 124, and 126) to communicate with other devices. For example, the communication device 124 (or 122 and 126 acting as softphones) may be used to connect to other telephones connected to a Public Switched Telephone Network (PSTN) 130 or a cellular network 140. In this implementation, the communication platform 114 includes a Private Branch exchange (PBX) or IP-PBX having a connection to the PSTN 130. The connection to the PSTN 130 may be established using any of the following technologies: Direct Inward Dialing (DID); Integrated Services Digital Network (ISDN) including Primary Rate Interface (PRI), Base Rate Interface (BRI) and Broadband ISDN (B-ISDN); Session Initiation Protocol (SIP); H.323; Inter-Asterisk exchange (IAX); and Media Gateway Control Protocol (MGCP).

The communication devices 122, 124 or 126 may also connect to a mobile phone 142 through a cellular network 140 using the communication platform 114. The cellular network 140 may be designed to operate with various technologies including, but not limited to: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA1010, EDGE (Enhanced Data rates for GSM Evolution), UMTS (Universal Mobile Telecommunication Systems), HSDPA (High-Speed Downlink Packet Access), IEEE 802.16e (also referred to as Worldwide Interoperability for Microwave Access or "WiMAX), or various other network technologies.

Similarly, communication devices (e.g. 132, 134, 142, 154, 156, and 158) outside the enterprise network 110 may connect to communication devices (e.g. 122, 124 and 126) within the enterprise network 110 using the technologies as discussed above.

Within the enterprise network 110, there may be an enterprise conference server 116 (which may also be referred to as corporate, enterprise or internal conference provider) for providing conference functionalities to enterprise users. Such functionalities may include creating audio, video, or web conferences between corporate users. However, the enterprise conference server 116 cannot be used to deal with external conference providers 160. In FIG. 1, reference number 160 is used to refer to one or more external conference providers. It will be understood that while FIG. 1 depicts only a single external conference server 162, there may be a plurality of external conference servers 162 depending on the number of external conference providers 160.

Thus, the enterprise network 110 includes an enhanced conference server 118 that can be used to generate conference provisioning data set for both the enterprise conference server 116 and external conference server(s) 162. Previously, communication devices were required to use the external conference interface 164 of each external conference provider 160 to generate the conference provisioning data set appropriate for the external conference provider. For clarity, the term conference provisioning data set used in this disclosure is intended to describe the set of data that is used to create, update or delete a conference event with the conference server.

Using the enhanced conference server 118, a corporate user using a communication device (such as 122, 124 or 126) may create a conference provisioning data set that is compatible with not only the enterprise conference server 116 but also with external conference server(s) 162. In other words, the corporate user need not use the external conference interface 164 of each external conference provider to create, update or delete a conference event. Instead, as it will be described below, the user can use a single user interface to communicate with the enhanced conference server 118 to generate the conference provisioning data set appropriate for the enterprise conference server 116 or the external conference server(s) 162. Moreover, communication devices outside the enterprise network 110 (such as 142, 154, 156 and 158) may also use the enhanced conference server 118 so long as the devices are authorized to connect to the enterprise network 110 through firewall 152. Such communication device may connect to the enterprise network 110 using wired or wireless communication technologies including, but not limited to: IEEE 802.11x standards (sometimes referred to as Wi-Fi) such as, for example, the IEEE 802.11 a, 802.11 b, 802.11 g, and/or 802.11 n standard; IEEE 802.16e (also referred to as Worldwide Interoperability for Microwave Access or "WiMAX"); IEEE 802.20 (also referred to as Mobile Wireless Broadband Access); IEEE 802.3 (Ethernet) standard; and any other communication standards reasonably contemplated by a person skilled in the art.

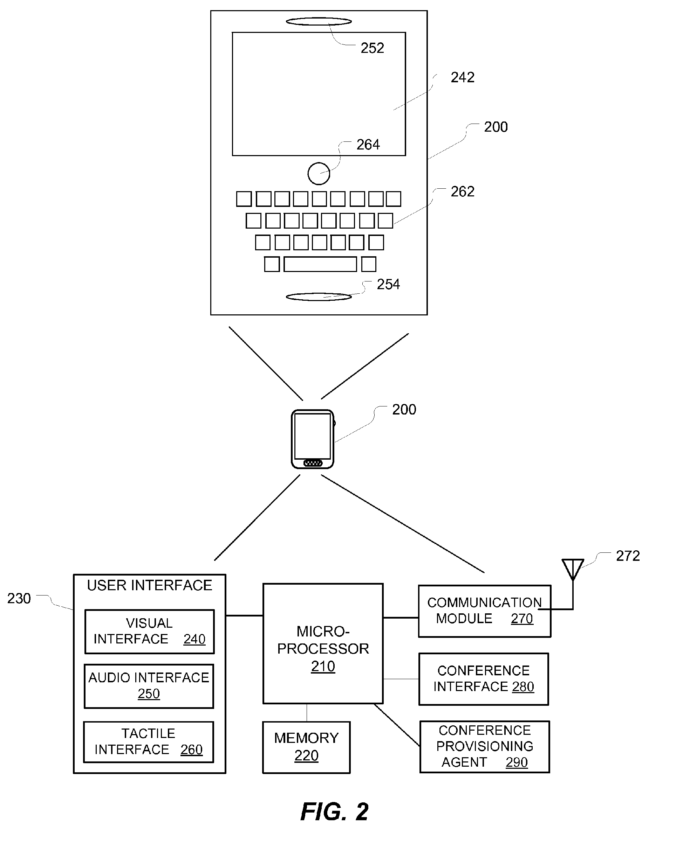

Now referring to FIG. 2, a schematic depiction of a communication device 200 (similar to 122, 124, 126, 142, 154, 156 or 158 in FIG. 1) implementing an embodiment of the present technology is shown. It should be expressly understood that this figure is intentionally simplified to show only certain main components. The communication device 200 may include other components beyond what is illustrated in FIG. 2. Moreover, while the communication device 200 is depicted as having generally the proportions of a smart phone, it may be other portable and non-portable devices including desktops, laptops, tablets, personal entertainment devices, VoIP phones, and softphones.

As illustrated in FIG. 2, the communication device 200 includes a microprocessor 210 (or simply a "processor") that interacts with memory 220. The memory 220 may be in such forms as random access memory (RAM), flash memory, hard disk drives, solid state drives, or any other forms contemplated by a person skilled in the art. The communication device 200 further includes a user interface 230 for receiving user input and for communicating information to the user. The user interface 230 may take the form of a visual interface 240 (e.g. display 242), an audio interface 250 (e.g. speaker 252 and microphone 254), or tactile interface 260 (e.g. keypad 262, thumbwheel 264, touchscreen, trackpad, trackball, and mouse - not shown). The communication device 200 may also include a USB port or serial port for connecting peripheral equipment.

The communication device 200 also includes a communication module 270 for communicating with one or more base stations (e.g. for telephone communication) or for connecting to a network (e.g. 110 in FIG. 1) using any of the wired or wireless technologies as discussed above. Where the communication device 200 is a wireless communication device, the communication device 200 may include an antenna 272.

Furthermore, the communication device 200 may include a conference interface 280 for receiving a user selection among a plurality of available conference providers presented to the user. The plurality of available conference providers may have been received from the enhanced conference server 118. Alternatively, or additionally, the plurality of available conference providers may be retrieved from memory 220 of the communication device 200. In this implementation, the communication device 200 may periodically update the plurality of available conference providers from the enhanced conference server 118. In another implementation, the availability of the plurality of conference providers may be dependent on the access permission of the user of the communication device 200. For example, while a corporation may have access to several different conference providers, access to certain providers may be limited to, for example, the executives of the corporation. This may be due to high costs associated with a particular conference provider. In another example, access to certain providers may be limited to the IT professionals. This may be during a transition period where the IT professionals are conducting migratory tests in preparation for a launch date.

In a further implementation, the availability of the plurality of conference providers may be dependent on licence availability associated with the conference providers. For example, the corporation may hold 10 licences to a particular conference provider. As these licences get used up, the conference interface may restrict the availability of the conference provider to ensure that licensing agreements are not violated.

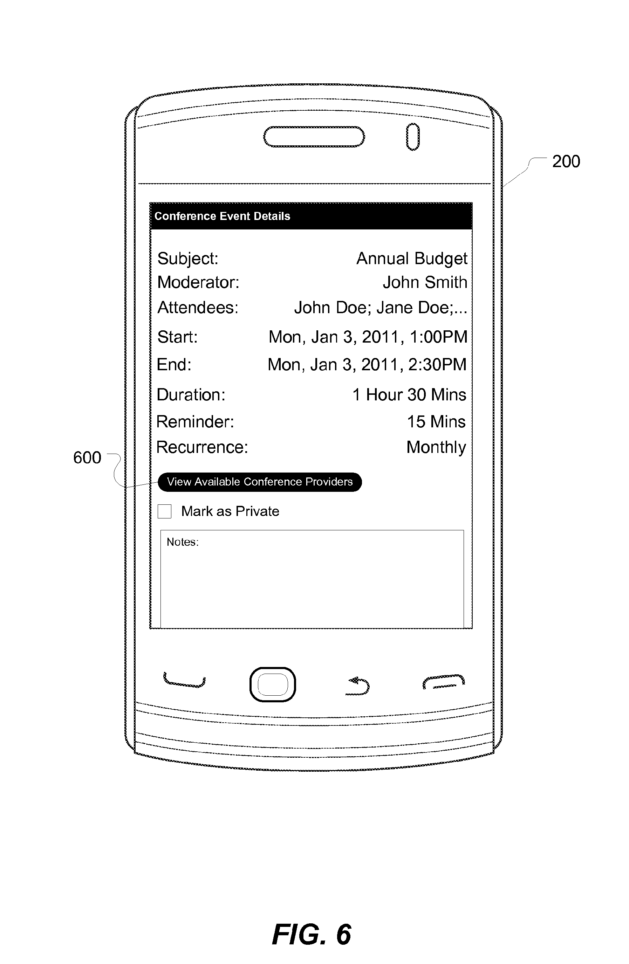

In an even further implementation, the availability of the plurality of conference providers may be dependent on the conference event details. For example, the moderator may specify that the conference event is to take play every first Monday of the month (i.e. recurrence set to "Monthly" in FIG. 6) between 1 PM and 2:30PM. Depending on the maintenance schedule of the conference provider, it may be determined that a particular conference provider may not be available.

The conference interface 280 may also be used to receive conference event details associated with the conference event from the user. The conference event details may or may not be specific to the selected conference provider. For example, conference event details common to all conference providers may concern the date and time of the conference event, the nature of the conference event (e.g. private or open), name of the moderator, name(s) of the attendee(s) and other related details. In another implementation, the conference event details may be specific to the selected conference provider. For example, the selected conference provider may be the only provider with video conferencing.

The communication device 200 may also include a conference provisioning agent 290 for communicating with the enhanced conference server 118 to generate conference provisioning data set with the selected conference provider. Using the conference provisioning agent 290, the communication device 200 sends the user selection and the conference event detail inputted through the conference interface 280 to the enhanced conference server 118. Where required, the conference provisioning agent 290 may perform necessary conversions to communicate with the enhanced conference server 118. For example, the conference provisioning agent 290 may convert all messages to BlackBerry® Optimized Session Signalling (BOSS), Gateway Message Envelope Protocol (GME), or extensible Markup Language (XML). In one embodiment, the communication device 200 may use the conference provisioning agent 290 for receiving conference access details from the enhanced conference server 118.

Thus, as it will be further described in details below, the conference interface 280 and the conference provisioning agent 290 allow the user of the communication device 200 to create, update and delete a conference event for the plurality of available conference providers using a single interface.

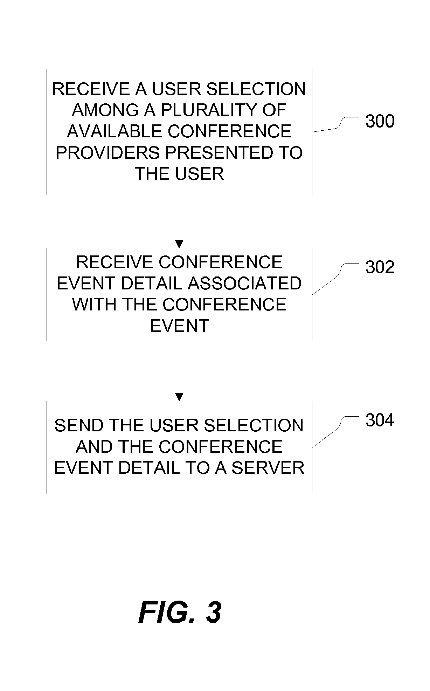

Referring to FIG. 3, the communication device (e.g. 200 in FIG. 2) receives a user selection among a plurality of available conference providers presented to the user 300. As discussed above, the conference provider may be within or external to the enterprise network 110. By using the communication device implementing an embodiment of the present technology, the user is able to make a selection among the plurality of available conference providers and create, update or delete a conference event associated with that conference provider through a common interface (e.g. 280 in FIG. 2). In one embodiment, the list of conference providers presented to the user may have been retrieved from the enhanced conference server (e.g. 118 in FIG. 1). In another embodiment, the available conference providers presented may have been retrieved from a memory. For example, the memory may be internal to the communication device such as 220 in FIG. 2. In another example, the memory may be in the form of portable memory such as flash-based memory or magnetic-based memory. In this implementation, the communication device may periodically update the information related to the available conference providers from the enhanced conference server.

In block 302 of FIG. 3, the communication device receives conference event detail associated with the conference event. Conference event details pertain to the specifics and the parameters of the conference event that may or may not be specific to the specific conference provider. Exemplary conference event details that are specific to the conference provider may be the type of conference such as video, audio-only or web conferencing. It may also refer to technical features that are only available on the specific conference provider such as a shared whiteboard for interactions between attendees. As for conference event details not specific to a particular conference provider, such details may include data and time of the conference event, reminder for the conference event, recurrence of the conference event, number of attendees, contact details of the attendees, and any other nonspecific settings and options for the conference event.

The communication device then sends the user selection and the conference event detail to the enhanced conference server (e.g. 118 in FIG. 1).

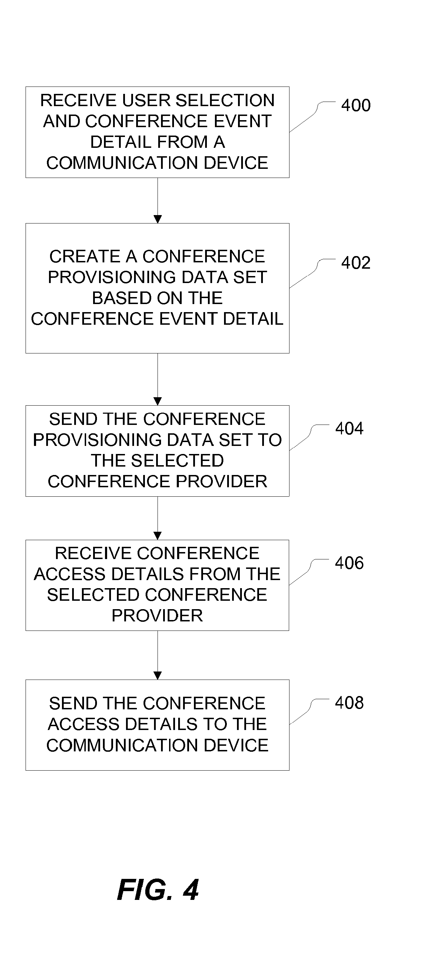

Now turning to FIG. 4, the process for creating a conference provisioning data set for the plurality of conference providers will be described from the viewpoint of the enhanced conference server in detail. At 400, the enhanced conference server (e.g. 118 in FIG. 1) receives the user selection and the conference event detail from the communication device. Using this information, the enhanced conference server creates a conference provisioning data set that includes the conference event detail and that conforms to the selected conference provider 402. In other words, the conference event detail defines the content and the user selection defines the format of the conference provisioning data set.

After creating the conference provisioning data set, it is sent to the selected conference provider to create, update or delete the conference event 404. If the conference event is successfully created, updated or deleted, the enhanced conference server receives the conference access details from the selected conference provider 406, which is then sent to the communication device 408. Thus, as FIGS. 3 and 4 illustrate, the user of the communication device is able to generate a conference provisioning data set to create, update or delete a conference event in any of the plurality of conference providers through a single interface (i.e. conference interface 280 in FIG. 2).

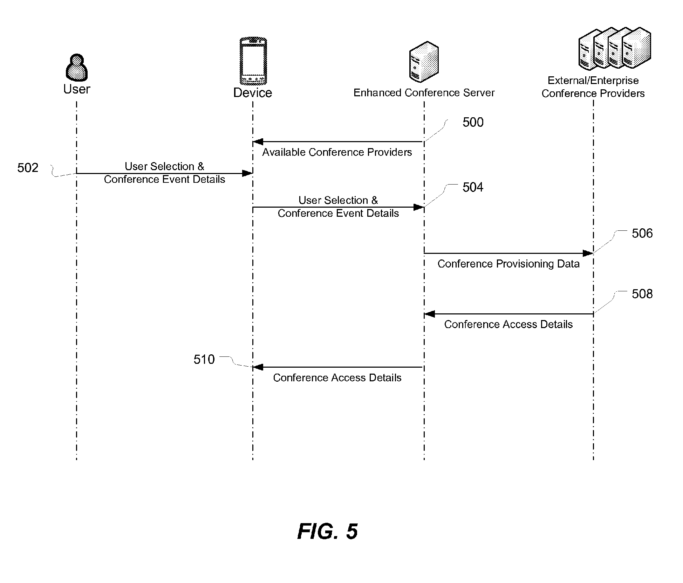

FIGS. 5-11 will now be used to describe an example embodiment of the present technology. At 500, the device may retrieve available conference providers from the enhanced conference server. As previously mentioned, the device may instead retrieve the available conference providers from a memory that is internal or external to the device. In such a case, at 500, the device may receive an update of the available conference providers from the enhanced conference server.

In one embodiment, prior to receiving a user selection among the plurality of available conference providers, the user may be requested to enter conference event details that are common to the available conference providers. An example embodiment is shown in FIG. 6. The embodiment shown in FIG. 6 may be part of a calendar application, for example but not limited to, Calendar of a communication device. The conference event may be an entry in the calendar and selected as other entries in the calendar. As shown, the communication device 200 has a display showing conference event details that are common to conference providers. For example, the conference event details may include subject, moderator's name, attendees' name(s), start and end date and time, duration, and reminder and recurrence settings that are not specific to a particular conference provider. Moreover, FIG. 6 also displays options such as the nature of the conference event (i.e. either private or open) and special notes that would be forwarded to the attendees. It will be understood that other conference event details may be available. While FIG. 6 depicts displaying conference event details common to the conference providers prior to the user selection from the plurality of available conference providers, it will be understood that selection of such details may come after the user selection. The implementation details shown in FIGS. 6-11 are used for illustrative purposes only.

In another embodiment, the conference event details inputted by the user may be used to determine the available conference providers. For example, using the conference event details, it may be determined that among the available conference providers, one of them may be going through maintenance at a particular time interval. Thus, by referring to FIG. 6, when the user clicks on button 600, the communication device may only display conference providers that are available during the start and end date and time.

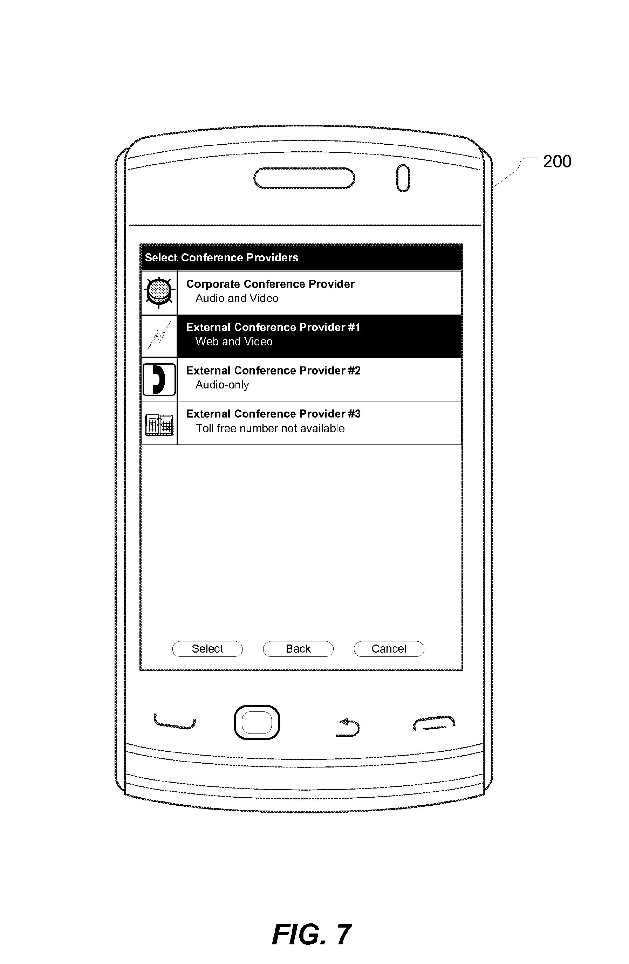

At 502, the user makes a selection from the plurality of available conference providers presented to him/her, an exemplary embodiment of which is shown in FIG. 7. In FIG. 7, four available conference providers are shown. The first is the enterprise conference server 116 that is within the enterprise network 110, while the other three are external to the enterprise network. However, a single interface may be used to navigate through the plurality of conference providers.

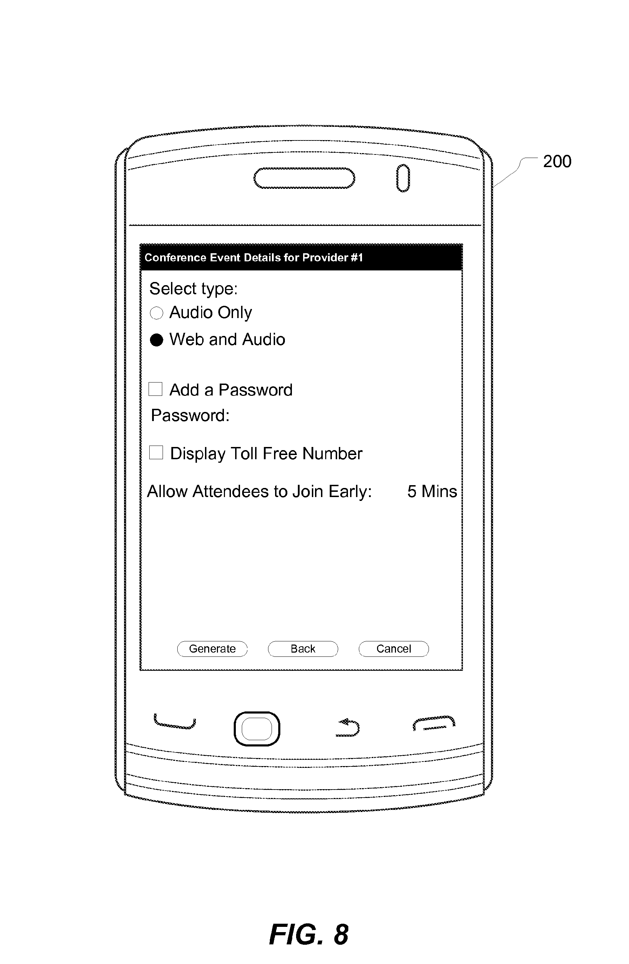

Once the selection is made, conference event details that are specific to the selected provider may be selected. Referring to FIG. 8, conference event details that are specific to the conference provider are shown. For example, the details may relate to the type of conference such as video conferencing or web conferencing. In FIGS. 7 and 8, among the available conference providers, the selected provider may be the only conference provider with both web and audio conferencing. Other details such as adding a password to restrict access to the conference event or displaying a toll free number for free access by the attendees may also be selectable.

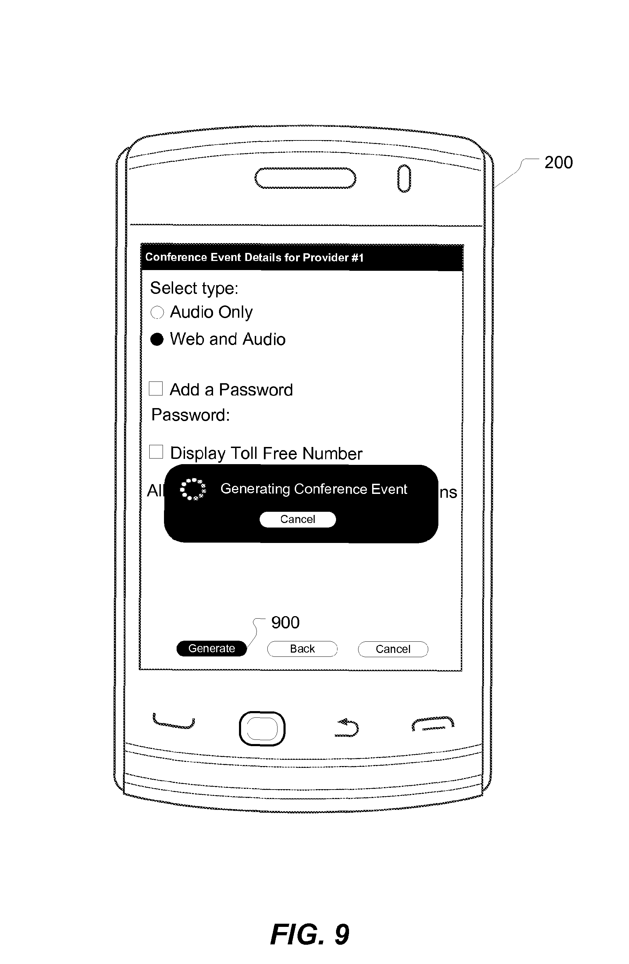

After selection, the user selects the generate button 900 to generate the conference event (i.e. as shown in FIG. 9), during which time the conference provisioning agent 290 of the communication device 200 sends the user selection (i.e. selection from FIG. 7) and the conference event detail (i.e. selection from FIGs. 6 and 8) to the enhanced conference server (i.e. 504 in FIG. 5).

Using the user selection and the conference event detail, the enhanced conference server 118 creates a conference provisioning data set. A conference provisioning data set is a data set that is specific to a particular conference provider and includes conference event information. Thus, the user selection indicates how the provisioning data set should be formatted and the conference event detail determines what information should be included within the data set. For example, the selected conference provider may require the data set to be in extensible Markup Language (XML) format according to a standard defined by its Application Programming Interface (API) documents.

At 506, the conference provisioning data set is sent to the selected conference provider, which is used to create, update or delete the conference event. Because the data set conforms to the standard required by the conference provider, the information contained therein can be used readily by the conference provider.

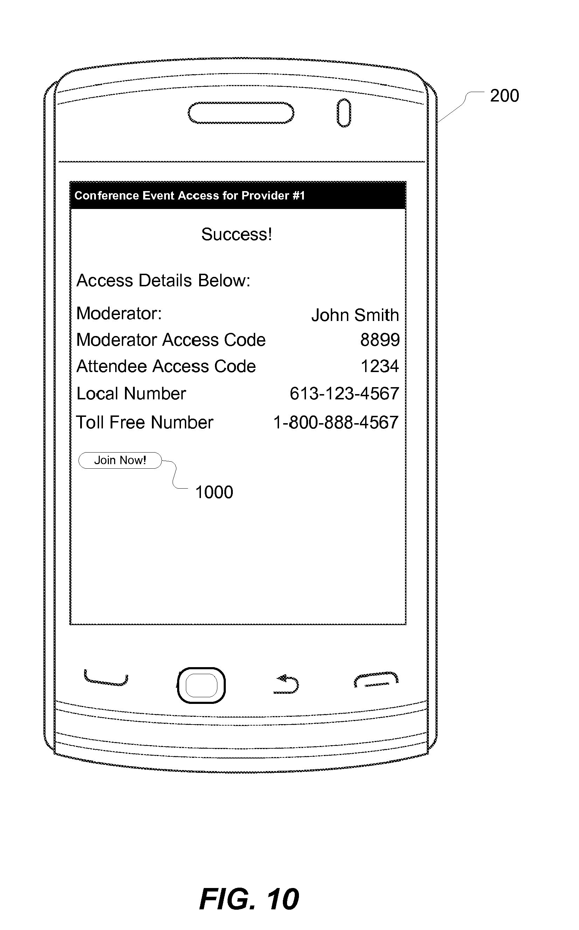

At 508, details relating to conference event access are sent to the enhanced conference server 118, which are then (at 510) forwarded to the communication device 200. As shown in FIG. 10, conference access details contain information on how to access the conference event. For example, the access details may include the access numbers and access code. It will be understood that depending on the conference event detail, the access details may vary. For example, if the conference event detail indicated that the conference is a web conference, a URL may be included in place of a local number. Also, the access information forwarded to a moderator and the attendees may be different. As shown in FIG. 10, for moderators, both the moderator access code and the attendee access code may be forwarded, while for attendees, only the attendee access code may be forwarded.

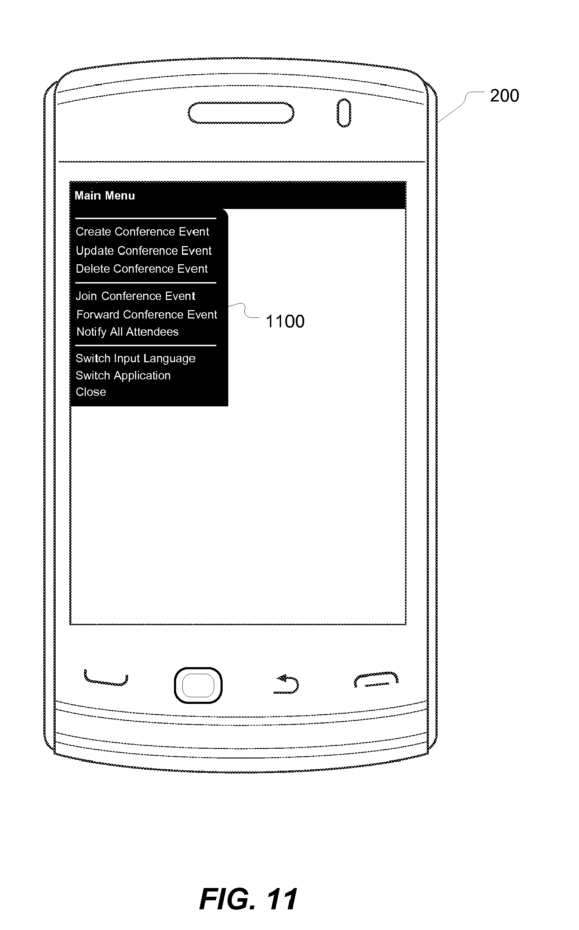

In another embodiment, the conference access details may also include conference bridge information for attendees to join the conference event. Joining the conference event may be facilitated by a simple indication such as a button interface 1000 in FIG. 10 or a menu selection within menu 1100 in FIG. 11. The conference bridge information may include information as to when the conference bridge may be available to connect the attendees and the moderator to create the conference event. For example, the conference moderator may have specified, as shown in FIG. 8, that the attendees may only join 5 minutes early. This means that the conference bridge will not be available to connect the attendees and the moderator prior to 5 minutes before the conference event. There may be numerous reasons for such a restriction. For example, it may be used as a cost reduction tool for the moderator since toll free calls may get charged back to the moderator by the minute. Thus, when the conference bridge is open, the conference interface 280 may provide an option to join the conference event.

While the patent disclosure is described in conjunction with the specific embodiments, it will be understood that it is not intended to limit the patent disclosure to the described embodiments. On the contrary, it is intended to cover alternatives, modifications, and equivalents as may be included within the scope of the patent disclosure as defined by the appended claims. In the description below, numerous specific details are set forth in order to provide a thorough understanding of the present patent disclosure. The present patent disclosure may be practiced without some or all of these specific details. In other instances, well-known process operations have not been described in detail in order not to unnecessarily obscure the present patent disclosure.

It is further understood that the use of relational terms such as first and second, and the like, if any, are used solely to distinguish one from another entity, item, or action without necessarily requiring or implying any actual such relationship or order between such entities, items or actions.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function (s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Some portions of the detailed description in the above are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

An algorithm is generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, as apparent from the above discussions, it is appreciated that throughout the specification discussions utilizing terms such as "processing," "computing," "calculating," "determining," or the like, refer to the action and/or processes of a computer or computing system, or similar electronic computing media player device, that manipulate and/or transform data represented as physical, such as electronic, quantities within the computing system's registers and/or memories into other data similarly represented as physical quantities within the computing system's memories, registers or other such information storage, transmit session or display devices.

Embodiments within the scope of the present disclosure can be implemented in digital electronic circuitry, or in computer hardware, firmware, software, or in combinations thereof. Apparatus within the scope of the present disclosure can be implemented in a computer program product tangibly embodied in a machine-readable storage medium for execution by a programmable processor; and method actions within the scope of the present disclosure can be performed by a programmable processor executing a program of instructions to perform functions of the present disclosure by operating on input data and generating output. Embodiments within the scope of the present disclosure may be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files. Embodiments within the scope of the present disclosure include computer-readable media for carrying or having computer-executable instructions, computer-readable instructions, or data structures stored thereon. Such computer-readable media may be any available media, which is accessible by a general-purpose or special-purpose computer system. Examples of computer-readable media may include physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system. Any of the foregoing can be supplemented by, or incorporated in, ASICs (application-specific integrated circuits). It should be understood that embodiments of the present disclosure may be used in a variety of applications. Although the present disclosure is not limited in this respect, the methods disclosed herein may be used in many apparatuses such as in the transmitters, receivers and transceivers of a radio system. Radio systems intended to be included within the scope of the present disclosure include, by way of example only, cellular radiotelephone communication systems, satellite communication systems, two-way radio communication systems, one-way pagers, two-way pagers, personal communication systems (PCS), personal digital assistants (PDA's), notebook computers in wireless local area networks (WLAN), wireless metropolitan area networks (WMAN), wireless wide area networks (WWAN), or wireless personal area networks (WPAN, and the like).

## Claims

1. A communication device (200) for generating a conference provisioning data set, the communication device comprising:
a conference interface (280) for receiving a user-selected conference provider from among a plurality of available conference providers (160) presented on a display and for receiving a conference event detail associated with a conference event; and
a conference provisioning agent (290) for communicating with an enhanced conference server (118) to generate the conference provisioning data set associated with the selected conference provider.

2. The communication device according to claim 1, wherein the conference provisioning agent communicates with the enhanced conference server to receive conference access detail.

3. The communication device according to claim 2, wherein the conference access detail includes conference bridge information.

4. The communication device according to any preceding claim, wherein information regarding the plurality of available conference providers is received from the enhanced conference server.

5. The communication device according to any preceding claim, wherein information regarding the plurality of available conference providers is stored in a memory.

6. The communication device according to claim 5, wherein the information regarding the plurality of available conference providers stored in the memory is periodically updated from the enhanced conference server.

7. The communication device according to any preceding claim, wherein the availability of the plurality of conference providers is determined by an access setting of the communication device.

8. The communication device according to any preceding claim, wherein the availability of the plurality of conference providers is determined by a licence availability.

9. The communication device according to any preceding claim, wherein the availability of the plurality of conference providers is determined by the conference event detail.

10. The communication device according to any preceding claim, wherein the conference event is an audio conference or a video conference.

11. A method for generating a conference provisioning data set, the method comprising:
receiving a user selection for a selected conference provider among a plurality of available conference providers (160) presented to the user (300);
receiving conference event detail associated with a conference event (302);
and
sending the user selection and the conference event detail to an enhanced conference server (118) to generate the conference provisioning data set associated with the selected conference provider (304).

12. The method according to claim 11, further comprising
receiving conference access detail associated with the conference event.

13. The method according to claim 11 or claim 12, wherein information regarding the plurality of available conference providers is received from the enhanced conference server.

14. The method according to any of claims 11 to 13, wherein information regarding the plurality of available conference providers is retrieved from a memory.

15. A computer-readable storage medium comprising instructions in code which when loaded into a memory and executed by a processor of a mobile device causes the mobile device to:
receive a user selection for a selected conference provider among a plurality of available conference providers (160) presented to the user (300);
receive conference event detail associated with a conference event (302);
and
send the user selection and the conference event detail to an enhanced conference server (118) to generate a conference provisioning data set associated with the selected conference provider (304).

## Amended claims

### Amended claims in accordance with Rule 137(2) EPC.

**1.** A communication device (200) for generating a conference provisioning data set, the communication device comprising:
a conference interface (280) for receiving a user-selected conference provider from among a plurality of available conference providers (160) presented on a display and for receiving a conference event detail associated with a conference event; and
a conference provisioning agent (290) for communicating with the conference server (118) to generate the conference provisioning data set associated with the user-selected conference provider.

**2.** The communication device according to claim 1, wherein the conference provisioning agent communicates with the conference server to receive a conference access detail.

**3.** The communication device according to claim 2, wherein the conference access detail includes conference bridge information.

**4.** The communication device according to claim 1, wherein information regarding the plurality of available conference providers is received from the conference server.

**5.** The communication device according to claim 1, wherein information regarding the plurality of available conference providers is stored in a memory.

**6.** The communication device according to claim 5, wherein the information regarding the plurality of available conference providers stored in the memory is periodically updated from the conference server.

**7.** The communication device according to claim 1, wherein the availability of the plurality of conference providers is determined by an access setting of the communication device.

**8.** The communication device according to claim 1, wherein the availability of the plurality of conference providers is determined by a licence availability.

**9.** The communication device according to claim 1, wherein the availability of the plurality of conference providers is determined by the conference event detail.

**10.** The communication device according to claim 1, wherein the conference event is an audio conference or a video conference.

**11.** A method for generating a conference provisioning data set, the method comprising:
receiving a user selection for a selected conference provider among a plurality of available conference providers (160) presented to the user (300);
receiving a conference event detail associated with a conference event (302); and
sending the user selection and the conference event detail to a conference server (118) to generate the conference provisioning data set associated with the selected conference provider (304) and based on the conference event detail.

**12.** The method according to claim 11, further comprising
receiving a conference access detail associated with the conference event.

**13.** The method according to claim 11, wherein information regarding the plurality of available conference providers is received from the conference server.

**14.** The method according to claim 11, wherein information regarding the plurality of available conference providers is retrieved from a memory.

**15.** A computer-readable storage medium comprising instructions in code which when loaded into a memory and executed by a processor of a mobile device causes the mobile device to:
receive a user selection for a selected conference provider among a plurality of available conference providers (160) presented to the user (300);
receive conference event detail associated with a conference event (302); and
send the user selection and the conference event detail to a conference server (118) to generate a conference provisioning data set associated with the selected conference provider (304) and based on the conference event detail.
